# EUROPEAN PATENT APPLICATION

(11) **EP 1 489 841 A1**
(43) Date of publication of application: **22.12.2004**
(21) Application number: 03707037.2
(22) Date of filing: 25.02.2003
(51) Int. Cl.: H04N 5/76, H04N 5/85, H04N 5/91, H04N 5/92

(54) **MOVING PICTURE DATA GENERATION SYSTEM, MOVING PICTURE DATA GENERATION METHOD, MOVING PICTURE DATA GENERATION PROGRAM, AND INFORMATION RECORDING MEDIUM**

(30) Priority: 27.02.2002 JP 2002051916
(71) Applicant: KONICA MINOLTA HOLDINGS, INC., Tokyo 100-0005 (JP)
(72) Inventor: OTA, Yoshitaka, Hachioji-shi, Tokyo 192-8505 (JP)
(74) Representative: Nicholls, Michael John
(86) International application number: PCT/JP2003/002023
(87) International publication number: WO 2003/073756

(57) **Abstract**

A moving image data creation system includes a developing section 2a for developing the film 4a provided by the customer 3, a reading section 2a to read a plurality of still image data from the film developed, a creating section 2c to create a difference data for each of the plurality of still image data, wherein the difference data which denotes the difference between a number of still image data, wherein the number being calculated from a preset display time for one image, a recording section 2d to record the moving image data, the still image data, a slideshow execution program, and a music data on an information recording medium.

## Description

### FIELD OF THE INVENTION

The present invention relates to a moving image data creation system, a moving image data creation method, and a moving image data creation program for creating a moving image based on still image data provided by a customer, as well as an information recording medium.

### BACKGRAOUD OF THE INVENTION

In recent years, there has been an increase in customers who process photographs taken by cameras, as digital image data. For example, in a digital camera, image data stored on an information recording medium such as a memory card is read at a computer terminal such as a personal computer, and the photograph image can be viewed on the personal computer by reproducing the image data with image display software installed on the personal computer.

Furthermore, the service of converting photographs taken with a film camera to digital images is being offered. The customer may for example, take the negative film of photographs that were taken to a photo service shop such as a lab or to a shop where photo orders may be placed such as a convenience store, and after the negative film is developed at the photo service shop or the like, the image data is read by a scanner or the like, and the read image is written onto an information recording medium such as a CD-R.

Furthermore, the customer who receives the information recording medium such as the CD-R which has the image data written thereon, may view the photograph images on a personal computer at home by reproducing the image with image display software, and thus even customers who do not own a digital camera can handle photographs as digital image data.

However, in the above-described services, because the presumption is made that the image data will be viewed on a computer terminal such as a personal computer or the like, a personal computer is needed in order to view the image data, and also the customer must have some amount of proficiency in operating personal computers. Thus, for a customer who is not accustomed to operating personal computers, when the information recording medium is received, the photographs cannot be enjoyed with the ease it would be enjoyed in case where the photograph image is output as a photograph print.

There are methods of continuously displaying data images using electronic album software or slide show software, but in these cases also the electronic album software or slideshow software must be installed on a personal computer beforehand. Furthermore, because it is the customer who must operate the software as well, it is difficult for customers who are not comfortable with personal computers to view the photograph images using these methods.

On the other hand, in recent years, moving image players for home use such as DVD players are being provided at low prices. Like most home use electronic devices, images and sound can be played with these moving image players for home use by carrying out simple operations, and even customers who are not accustomed to personal computers can easily operate these devices. However, because these moving image players for home use cannot usually use formats such as JPEG which is for recording still images, photograph images read from film or those obtained by digital cameras cannot be shown using these moving image players.

### SUMMARY OF THE INVENTION

The present invention was conceived in view of the above-described problems, and the main objects thereof are to provide a moving image data creation system, a moving image data creation method and a moving image data creation program by which a photograph image can be easily shown on a moving image player for home use such as a DVD player or on a computer terminal such as a personal computer, as well as an information recording medium on which the moving image data played by said program is recorded.

In order to achieve the aforementioned objectives, the moving image data creation system comprises at least: a means for reading a plurality of still image data from a developed film; a means for creating for each of the plurality of still image data, difference data which denotes the difference between a number of still image data, said number being calculated from a preset display time for one image; a means for creating a moving image by adding the difference data to each of the plurality of still image data; and a means for recording at least the moving image data and the still image data in the listed order, onto an information recording medium.

Furthermore, the moving image data creation system comprises at least: a means for reading a plurality of still image data from an information recording medium provided by the customer; a means for creating for each of the plurality of still image data, difference data which denotes the difference between a number of still image data, said number being calculated from a preset display time for one image; a means for creating a moving image by adding the difference data to each of the plurality of still image data; and a means for recording at least the moving image data and the still image data in that order, on an information recording medium.

In this invention, the aforementioned difference data comprises: data in which the difference when compared with a corresponding still image is 0, and data in which the difference when compared with a corresponding still image is 0 as well as change data which is calculated based on a preset screen switching effects. The moving image creation means may be configured such that the data whose difference is 0 and the change data are added to the still image data in that order.

Further, the recording means of this invention records on an information recording medium, a slideshow execution program which allows the computer to function as a means for displaying the still image data as slides.

In this invention, the recording means may be configured such that music data to be played at the time of slide display of the still image data is recorded on the information recording medium. The moving image data creation system may also be equipped with a communicating means for communicating with a server which distributes music data via a communication network, and the music data information received from the server is recorded on the information recording medium.

Furthermore, in the present invention, it is preferable that the information recording medium is a CD-R or DVD-R, and that the moving image data is recorded in the information recording region at the inner circumference side of the information recording medium.

In addition, the moving image data creation method of this invention at least comprises: a step of reading the still image data from the developed film using a reading means; a step of using the difference data creation means to create for each of the plurality of still image data, difference data which denotes the difference between a number of still image data, said number being calculated from a preset display time for one image; a step of creating moving image data by adding the difference data to each still image data using the moving image data creation means; and a step of recording at least the moving image data and the still image data on the information recording medium in that order using the recording means.

Furthermore, the moving image data creation method of this invention at least comprises: a step of reading still image data from an information recording medium provided by the customer using a reading means; a step of using the difference data creation means to create for each of the plurality of still image data, difference data which denotes the difference between a number of still image data, said number being calculated from a preset display time for one image; a step of creating moving image data by adding the difference data to each still image data using the moving image data creation means; and; a step of recording at least the moving image data and the still image data in that order, on an information recording medium using the recording means.

Also, the moving image data creation method of this invention comprises at least: a step of reading still image data from the developed film using a reading means; a step of using an information recording means to record on an information recording medium, at least the still image data, and a moving image data creation program which functions as a means for creating for each still image data, a number of difference data, the number being calculated from the preset display time for one image as well as a means for creating. the moving image by adding the difference data to each of the plurality of still image data.

The present invention may be configured such that the display time for one image or the screen switching effect is set based on the slide effects of the slide show performed at the customer's computer terminal, and moving image data is thereby created at the customer's computer terminal.

Furthermore, the moving image data creation program causes the computer to function as: a means for sequentially extracting read still image data from a film or an information recording medium provided by the customer; a means for calculating the number of data added to each of the still image data from a preset display time for one image; a means for creating difference data whose difference compared to the still image data is 0; a means for creating moving image data by sequentially combining data in which the number of difference data is added to each of the still image data in the order with which the screens are displayed.

Also, the moving image data creation program causes the computer to function as: a means for sequentially extracting read still image data from a film or an information recording medium provided by the customer; a means for calculating the number of data added to each of the still image data from the preset display time for one image; a means for creating difference data whose difference compared to the still image data is 0; a means for creating change data in which the difference compared to the still image data is calculated based on a preset switching effect; a means for creating moving image data by sequentially combining data in which the number of difference data and of the change data has been added, with each of the still image data in order with which the screens are displayed.

Also, the information recording medium of this invention has recorded thereon a plurality of still image data read from a film or an information recording medium provided by a customer and moving image data created by adding to each of the plurality of still image data, a number of difference data indicating the difference between said still image data and a number of still image data, said number being calculated from a preset display time for one image.

In this manner, in the moving image data creation system of this invention, moving image data is created from still image data read from a film or an information recording medium brought in by the customer, and because recorded on the information recording medium are moving image data, still image data, a slide show execution program, and if necessary music data, a customer who is not accustomed to operating a computer may enjoy the photograph images by showing them as moving data on a moving image player for home use such as a DVD player. Furthermore, the customer who is accustomed to operating a computer may display the still image data using a slide show execution program or may show the moving image data with a moving image playing program installed on the computer. The customer may thus view the photograph image using a preferred method.

In addition to the still image data and the slide show execution program, by recording on the information recording medium, a moving image data creation program which causes the computer to function as a means for creating moving image data from still image data, the customer may simulate a slide effect for the still image data using a slide show execution program on a home personal computer, and because moving image data can subsequently be created based on the slide effect using the slide image data creation program, the moving image data created from the still image data can be customized. As a result the customer can enjoy a slide show that better suits his or her preferences.

### BRIEF DESCRIPTION OF THE DRAWINGS

Fig. 1 shows the configuration of the moving image data creation system of the first embodiment of this invention.
Fig. 2 is a block diagram showing the configuration of the lab of the moving image data creation system of the first embodiment of this invention.
Fig. 3 is a flow chart showing the steps in the moving image data creation method of the first embodiment of this invention.
Fig. 4 shows the data recording regions of the information recording medium of the first embodiment of this invention.
Fig. 5 is a flowchart of the steps for creating the moving image data of the first embodiment of this invention.
Fig. 6 shows the configuration of the moving image data of the first embodiment of this invention.
Fig. 7 is a flowchart showing a specific example of steps for creating the moving image data of the first embodiment of this invention.
Fig. 8 shows another configuration of the moving image data creation system of the first embodiment of this invention.
Fig. 9 shows yet another configuration of the moving image data creation system of the first embodiment of this invention.
Fig. 10 is a flow chart showing the steps in the moving image data creation method of the second embodiment of this invention.
Fig. 11 shows the configuration of the moving image data of the second embodiment of this invention.
Fig. 12 is a flowchart showing a specific example of steps for creating the moving image data of the second embodiment of this invention.
Fig. 13 is a flowchart showing another specific example of steps for creating the moving image data of the second embodiment of this invention.
Fig. 14 shows the configuration of the moving image data creation system of the third embodiment of this invention.
Fig. 15 shows the configuration of the lab for the moving image data creation system of the third embodiment of this invention.
Fig. 16 is a flow chart showing the steps in the moving image data creation method of the third embodiment of this invention.

### DETAILED DESCRIPTION OF THE PREFERRED EMBODIMENT

One preferable embodiment of the moving image data system of this invention comprises: a means for developing film provided by the customer at a photo service shop such as a lab; a means for reading a plurality of still image data from the developed film; a means for creating for each still image data, a number of difference data, said number calculated from the preset display time for one image; a means creating moving image data by adding the difference data to each still image data; a means for recording on a information recording medium, the moving image data, still image data, a slide show execution program which functions as a means for allowing the computer to perform a slide display of said still image data, and if necessary music data to be played when the still images are being displayed as a slide show. The customer who receives the information recording medium may view the photograph image on any of devices such as a moving image player for home use such as a DVD player and the like, or a computer terminal such as a personal computer and the like.

That is to say, fixed time display of still image data, or the switching operation thereof is MPEG encoded as continuous moving image data, and if necessary sound data for music which is played so as to correspond with the moving image data is also encoded, and then recorded as one file or as a series of files at a first position of an information recording medium such as a CD-R or DVD-R, and subsequently the original still image information which was used in creating the moving image, is recorded in a still image format such as JPEG.

When an information recording medium on which recording has been done in this manner is played in a moving image player for home use such as a DVD player, because only the portion that was recorded first is recognized, it can be played as only a moving image data disk. Furthermore, since many DVD players have a function in which the first image of each chapter can be displayed as a list, and a function for jumping between chapters and the like, the operating ability when playing the image data can be improved by pre-recording the display time for each still image data as a chapter.

Also, when the information recording medium on which recording has been done in the aforementioned manner is played on a computer terminal such as personal computer or the like, because all the files can be viewed on the personal computer, the still image data can be viewed using a slide show execution program recorded on the information recording medium. Furthermore, the moving image data maybe viewed using MPEG decoding software.

By recording a moving image data creation program on the information recording medium, in addition to the still image data and the slide show execution program, the customer may simulate a slide show on the personal computer by setting the slide effects (display time for one image, method for image switching and the like) based on preference, and moving data may be created thereafter, based on the slide effects set using the moving image data creation program.

Embodiments of the present invention are described using the accompanying drawings in order to describe the aforementioned embodiments of the present invention in further detail.

### [Embodiment 1]

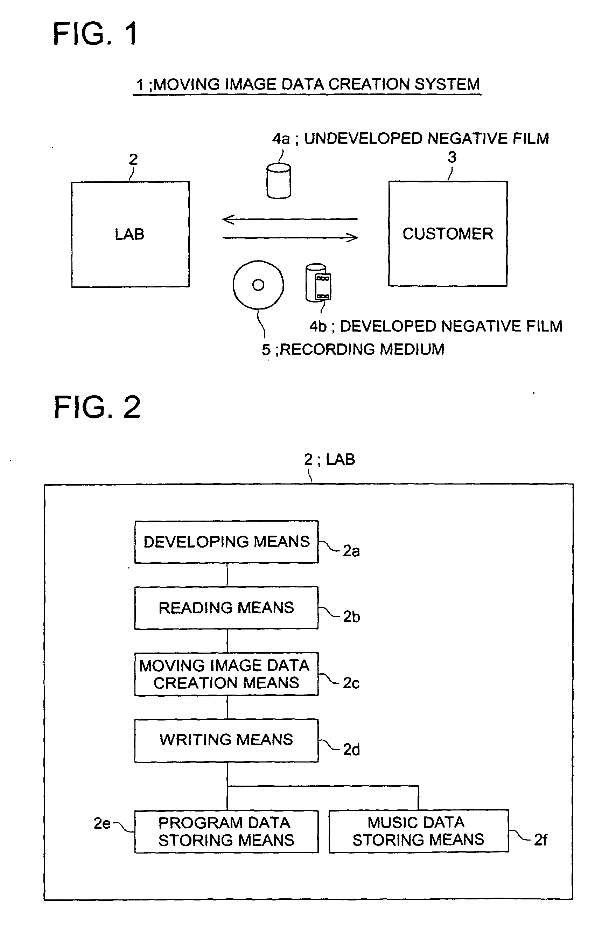

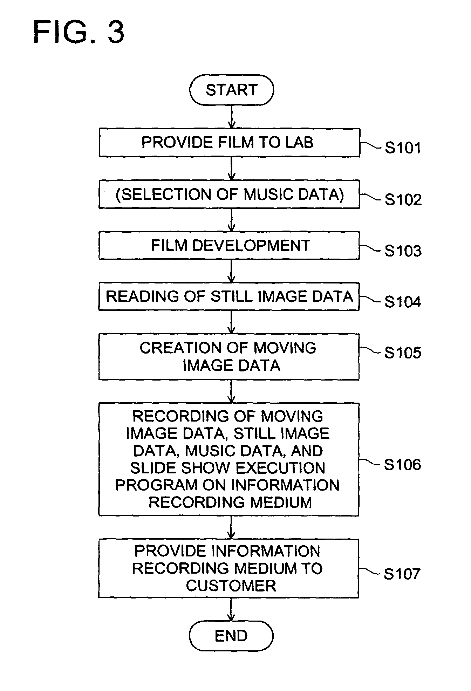

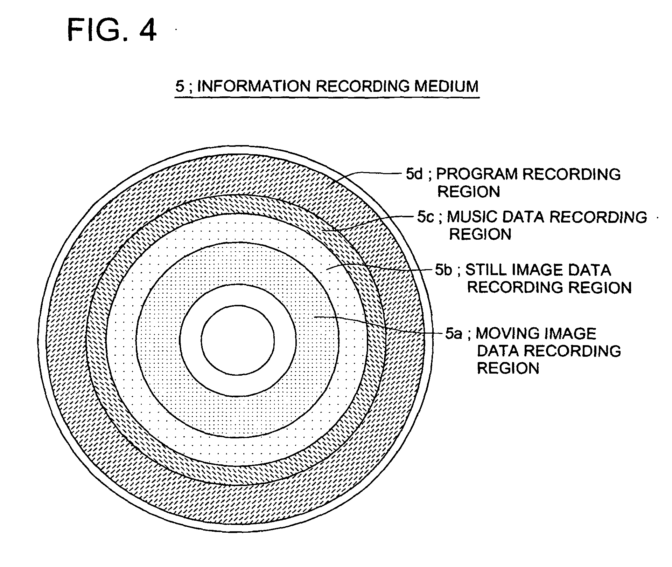

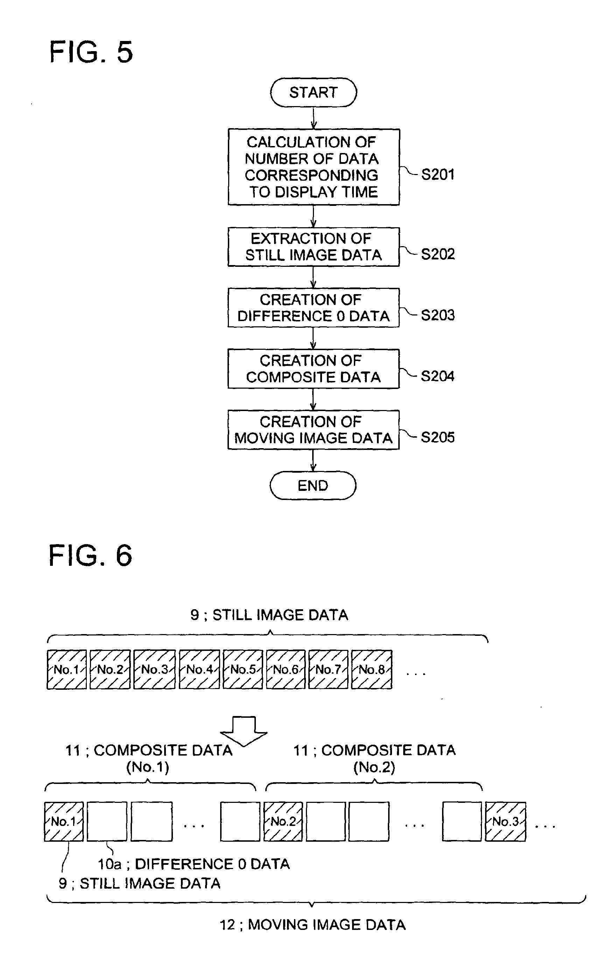

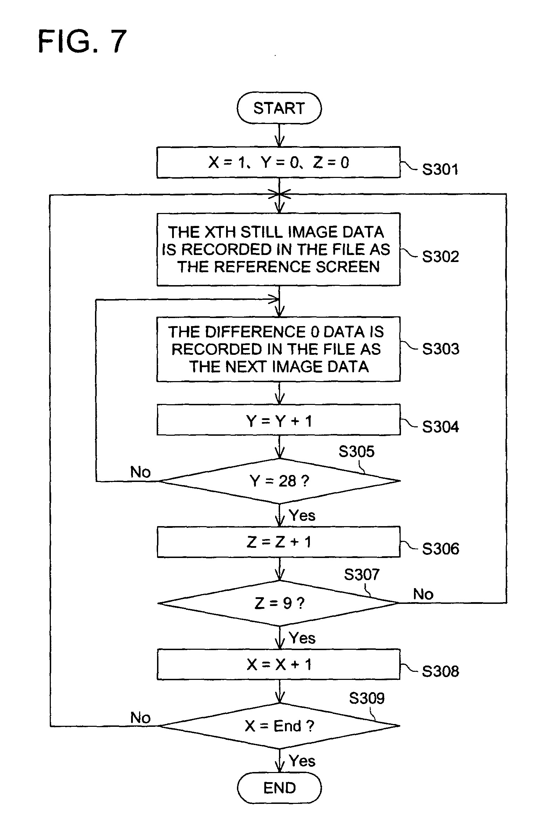

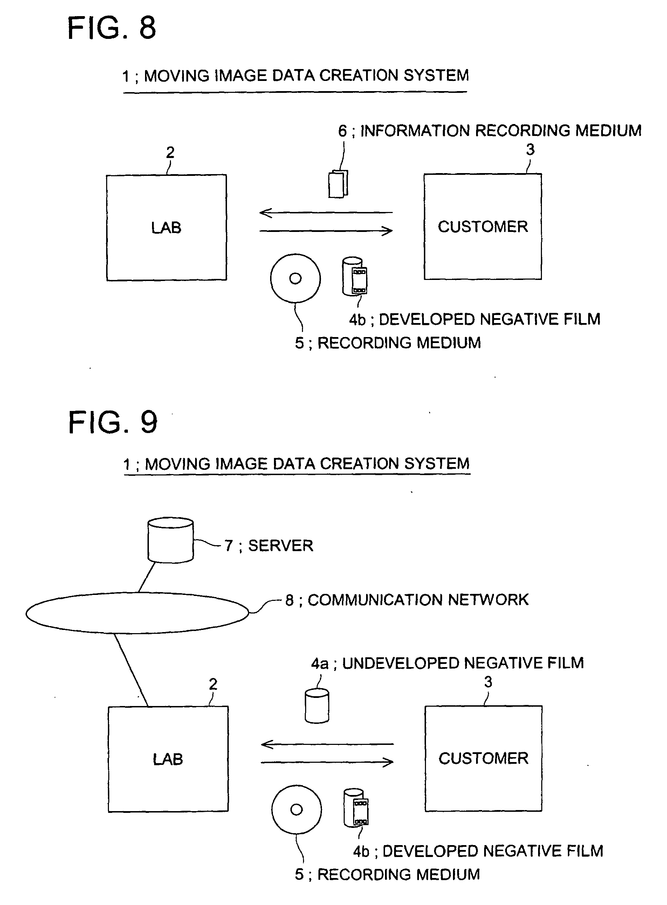

Firstly, the moving image data creation system and moving image data creation method, as well as the information recording medium of the first embodiment of the present invention will be described with reference to Figs. 1 through 9. Fig. 1 shows the configuration of the moving image data creation system of the first embodiment of this invention in frame format. Fig. 2 is a block diagram showing the means installed in a photo service shop such as a lab where moving image data is created. Fig. 3 is a flow chart showing the steps in the method for creating the moving image data of this example, while Fig. 4 shows the configuration of the recording regions of the information recording medium. Figs. 5 and 7 are flowcharts of the steps for creating the moving image data. Fig. 6 shows the configuration of the moving image data in frame format. Figs. 8 and 9 show other configurations of the moving image data creation system of this example.

It is to be noted that "still image data" in the following description refers to one independent image data group and to all the pixels of the data written in their original state due to file formatting, as well as data written as compressed data to avoid redundancy. The most frequently used method is that in which the file is compressed in JPEG format and then written, but files which have been compressed in other formats or uncompressed files may also be used.

Furthermore, "moving image data" refers to data in which the display is such that images are switched at a fixed time interval. For example, in MPEG files and the like, the reference image data is written as independent data, and it is possible to show the image using only the reference image data, but after that only the difference between the image and the reference image is recorded, and thus the image is shown for the first time after being compared with the reference image.

Firstly, the configuration of the moving image data creation system will be described with reference to Fig. 1. The moving image data creation system 1 of this embodiment comprises a customer 3 who provides the undeveloped negative film 4a as a photograph image and a lab 2 in which the undeveloped negative film 4a is developed and the still image data is read, then moving image data is created based on the read still image data and the written onto an information recording medium 5 such as a CD-R, DVD-R or the like.

Furthermore, as shown in Fig. 2, the lab 2 comprises: a developing means 2a for developing the undeveloped negative film 4a provided by the customer 3; a reading means 2b for reading the still image data from the developed film; a moving image data creation means 2c for creating moving image data from still image data; a writing means 2d for writing moving image data, still image data, music data, and a slide show execution program onto the information recording medium 5; a program data storing means 2e for storing the slide show execution program, and a music data storing means 2f for recording music data.

It is to be noted that the aforementioned means may be configured separately, or alternatively 2 or more means such as the developing means 2a, the reading means 2b, the moving image data creation means 2c, and the writing means 2d may be configured as one unit. Also, in the case where music data is not recorded on the information recording medium 5, it is not necessary to provide music data storing means 2f. Furthermore, a printer which creates ordinary prints based on image data read by the reading means 2b may be provided. The type of printer is not particularly limited, and various types of printer such as an inkjet printer, an electrophotographic printer, or a silver salt printer may be used.

Furthermore, in the example described above, at the lab 2, the customer 3 requests development of the undeveloped negative film 4a and creation of the information recording medium 5 on which the moving data is recorded, but the configuration may be such that the request is done via an order shop such as a convenience store or the like. In addition, this description is based on the customer 3 providing the image data as the undeveloped negative film 4a, but a developed negative film or a positive film (developed or undeveloped) may be supplied. Also, as shown in Fig. 8, information recording mediums 6 like memory cards and CDRs which include compact flash (registered trademark), smart media, memory stick (registered trademark), multimedia card, SD memory card on which image data obtained by a print or a digital camera is recorded may also be provided.

The steps performed by using the moving image data creation system 1 having the aforementioned configuration are described with reference to the flow chart in Fig. 3, from the point where the customer 3 takes in the undeveloped negative film 4a to the lab 2 a to when the customer 3 obtains the information recording medium 5 which has recorded thereon moving image data, still image data, music data, and a slide show execution program.

First in step S101, the customer 3 takes the undeveloped negative film 4a in which photographing was done using a film camera to a photo service shop such as a lab 2 or the like and requests development of the undeveloped negative film 4a and creation of the information recording medium 5. The photograph images recorded on the undeveloped negative film 4a may be photograph images taken by the customer or those taken by another customer. Furthermore, the photograph image is not limited to those obtained by photographing with a camera, and may be image data obtained from communication networks such as the internet and the like, or image data processed by the customer using image processing software.

Subsequently, the development processing is started at the lab 2 which received the request for development, but in the case where music data which is to be played along with the still image data in the slide show is to be recorded on the information recording medium 5, the lab 2 shows the customer 3 a list of music data which is stored on the music data recording means 2f, and the customer 3 selects the desired music data from the list. It is to be noted that in the case where the music data is not recorded on the information recording medium 5, this step may be omitted. Alternatively, the lab 2 may set the music data or else provided a music data selection terminal at the lab 2, and the customer may select the music data at this terminal.

In step S103, the lab 2 develops the undeveloped negative film 4a using the developing means 2a, and in step S104, the developed negative film is read using a reading means 2b such as a scanner and the like to thereby obtain the still image data. The format of this still image data may be any format that is readable by the computer owned by the customer 3, and JPEG, BMP, and JIF and like data formats may be used, and the customer 3 may select the format of the still image data to be recorded on information recording medium 5. It is to be noted that in the case where the customer 3 provides the image data as a developed negative film or as an information recording medium 6, the development processing of step S103 may be omitted. Furthermore, when the image data is provided as information recording medium 6, the still image data may be read directly from the information recording medium 6 in step S104.

In step S105, moving image data is created using the moving image data creation means 2c, based on the still image data read by the reading means 2b. Specific examples of steps for creating the moving image data are described in the following. It is to be noted that the format for the moving image data can be any format that can be recognized by a moving image player for home use such as MPEG1 MPEG2, and the configuration may be such that the customer 3 may select the format of the data image to be recorded on information recording medium 5.

In step S106, the still image data which was read, the moving image data which was created, the music data, and the slide show execution program are written onto the information recording medium 5 in a state that is readable by a computer. As stated above, the information recording medium 5 may be any one which can be played on a moving image player for home use such as CD-R, DVD-R and the like. In addition, at the time of writing, in order that the moving image data can be played on a moving image player for home use such as a DVD player, it is preferable that the moving image data is first written, and then the still image data, and the music image data, and the slide show execution program are written thereafter in that order. When the data is written in that order, the information recording medium 5 is configured as shown in Fig. 4, such that the moving image data recording region 5a is formed at the innermost circumferential portion; and the still image data recording region 5b, the music data recording region 5c, the program recording region 5d are formed in succession at the outer side thereof.

It is to be noted that that the order of the still image data recording region 5b, the music data recording region 5c, the program recording region 5d is not limited to that shown in the figure, and any order is permissible provided that the still image data recording region 5a is at the innermost circumferential portion. Furthermore, in the case where a slide show execution program is installed in the computer owned by customer 3 beforehand, the writing of the slide show execution program can be omitted, and the customer 3 may make a selection to determine whether or not a slide show execution program is recorded on the information recording medium 5.

Subsequently in step S107, the lab 2 provides the customer 3 with the information recording medium 5 and the developed negative film 4b, and the customer 3 views the image using a moving image player for home use such as a DVD player or a computer terminal such as a personal computer.

Next, the steps of creating the moving image data from the still image data will be described with reference to Figs. 5 through 7.

The moving image data creation method of this embodiment is carried out using the moving image data creation means 2c. As shown in Figs. 5 and 6, the steps performed by the moving image data creation means 2c are: step S201 of calculating the number of image data displayed within a certain time, from the preset time using the slide effect for displaying one still image data; step S202 of sequentially extracting a plurality of still image data 9 read by the reading means 2b; step S203 of creating the aforementioned number of difference data (in this embodiment, the same images are displayed and thus difference is "0" and will be referred to as 0 data 10a hereinafter); step S204 of creating composite data 11 in which the 0 data 10a which was created is added to the extracted still image data 9; and step S205 of creating moving image data 12 by linking together composite data 11.

In other words, in the moving image data creation method of this embodiment, the still image data 9 are not just simply linked together, but rather, a number of difference 0 data, said number being calculated from the display time, are added to each still image data, and the composite data 11 comprising the still image data and the difference 0 data is thereby created. By carrying out this type of process, moving image data 12 is created which has the same display effect as when still image data are shown as a slide show.

Specific examples of steps for creating the moving image data are described in the following with reference to Fig. 7. When creating the moving image data, the frame rate may be freely set, but it should be set at 60 frames/second in order to be viewed on an ordinary television. In addition there are 30 screens for 1 reference screen, and the display is switched at 5 second intervals.

Firstly, in step S301, X (the still image data number) is set to 1, Y (the number of image data displayed in 0.5 seconds) is 0, and Z (the number of times Y is repeated) is set to 0. Next in step S302, the xth still image data is recorded in the file as the reference screen.

In steps S303 to S305, image data in which there is difference 0 between said image and the previous image is added to the file as the image data which is 1/60 second after. This is repeated 29 times and image data groups are created which are displayed for 0.5 seconds.

Next in steps S306 and S307, the operation for creating the image data group is repeated 9 times and composite data that are displayed for 5 seconds are created.

In steps S308 and S309, by repeating the operation of creating the composite data a number of times equivalent to the number of still image data, moving image data is created in which each still image data is displayed for 5 seconds.

MPEG1 is the image format used for this moving image data, and if this is recorded on CD-R as the information recording medium 5, a VideoCD disk is created which can be played on an ordinary DVD player. VideoCD specifications have stipulations for music data, and if music data is added in accordance with these stipulations, moving image data with music can be created.

Furthermore, MPEG2 is used as the image format for the moving image data, and if this is recorded on DVD-R as the information recording medium 5, a DVD-Video disk is created which can be played on an ordinary DVD player. DVD-Video specifications have stipulations for music data, and if music data is added in accordance with these stipulations, moving image data with music can be created.

When the information recording medium 5 is played on a personal computer, if an execution file (slide show execution program) is installed beforehand in the personal computer, the still image data, the display time thereof, and switching effect options and the like will be saved in the execution file. However, this execution file is only compatible with computers having the same execution file installed therein. Thus, saving the execution file on the information recording medium 5 together with the still image data, the display time thereof, and switching effect options, has the advantage that there is no longer any need to be concerned about whether or not the same execution file has been installed.

The slide show execution program recorded on the information recording medium 5 is preferably the program disclosed in Patent Application No. 2002-13789 which was previously filed by the present inventors. In this program, the still image data and the music data are not independently displayed/played, but rather are linked to each other and displayed/played, and thus a slide show can be enjoyed in which the still image data and the music data are played together as one.

More specifically, the slide show execution program allows the computer to function as a music data analysis means which performs: the process of calculating play time for the music data; the process of extracting the tempo and phrases of the music data as well as sound data and pauses; the process of setting the display timing of the still image data and like processes, and also as an image data analysis means which performs: the process of extracting specific forms or colors from the still image data; the process of selecting music data to match image data using the characteristics of the still image data.

Furthermore, the slide show may be set up such that the playing time of the music data is extracted from the format or size, or header information or the like of the music data, and the playing time of the music data is divided by the number of still image data to thereby calculate the display time for one still image data and then the play completion time of the music data are made to coincide with the display completion time for the still image data, or the play completion time of a plurality of music data may coincide with the display completion time of the still image data.

The tempo of the music data may be extracted from the degree of strength, wave frequency and the like thereof, and the music slide effect time (for example, the fade in/fade out time) may be set so as to match the tempo of the music data. In the case where the tempo of the music is fast, the slide effect too is sped up, and on the other hand, when the tempo of the music is slow, the time for the slide effect is made longer, and thus the tempo of the music and the slide effect are caused to match.

In addition, the slide show may be set up such that the sound data and pauses of the music data may be extracted from the degree of strength, wave frequency and the like thereof, and the music may be divided into phrases, and for example, still image data for one photo is displayed during one phrase, and by causing the phrase of the music data and display of the still image data to occur simultaneously, there is a sense of harmony between the music and image and the effect of the slide show is thereby improved.

By using the moving image data creation system 1 of the present invention in this manner, when the customer 3 provides the undeveloped negative film 4a or the information recording medium 6, at the lab 2, still image data is read; moving image data is created based on preset slide effects; and then the moving image data, the still image data, and if necessary sound music data and a slide show execution program are written onto an information recording medium 5 in a form that is readable by a computer. Thus the customer 3 may enjoy the photograph image using any of devices like a moving image player for home use such as a DVD player and the like or a computer terminal such as a personal computer or the like.

It is to be noted although the configuration which was described above includes a means 2f for storing the music data at the lab 2, and as shown in Fig. 9, the lab 2 may connect to the server 7 which provides music data distribution service via the communication network 8. By having this type of configuration, there is no need to store music data, or to perform operations to update this data at the lab 2, and the customer 3 can always be provided with the latest music.

### [Embodiment 2]

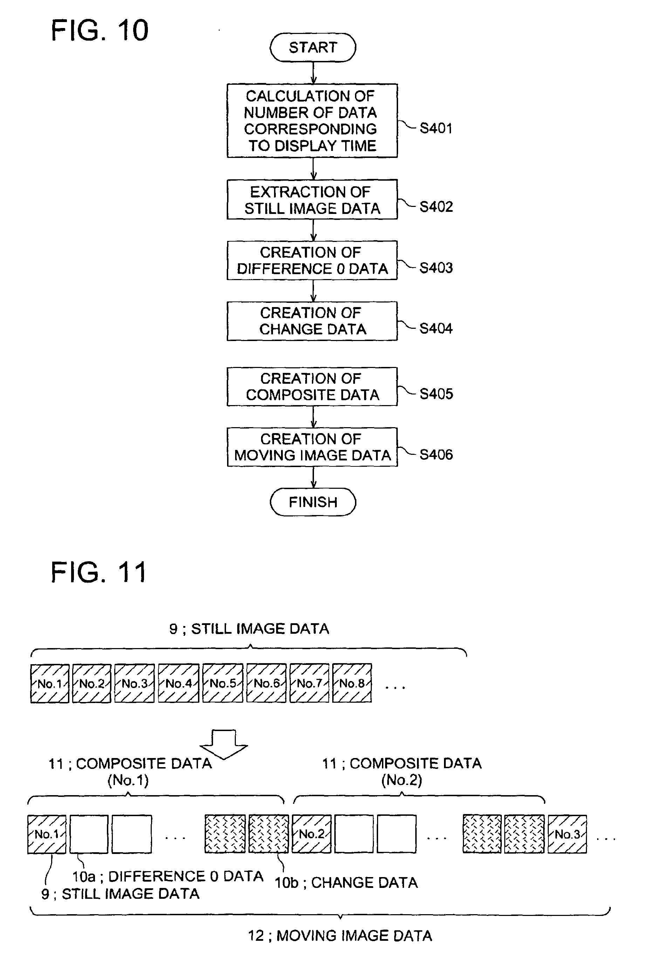

Next the moving image data creation method of the second embodiment of this invention is described with reference to Figs. 10 through 13. Fig. 10, 12 and 13 are flow charts of the steps for creating the moving image data, while Fig. 11 shows the configuration of the moving image data in frame format.

In the foregoing first embodiment, the moving image data is created based on the slide effect by which the still image data is switched in a very shot space of time. However, at the time when the switch is made from one still image data to the next still image data, moving image data may be created in which the screen can be gradually switched using a prescribed slide effect.

The steps for creating the moving image data having this type of slide effect are described in Figs. 10 through 13.

As shown in Figs. 10 and 11, the steps performed at the moving image data creation means 2c are: step S401 of calculating the number of image data displayed within a certain time based on the preset time for displaying one still image data by using the slide effect; step S402 of sequentially extracting a plurality of still image data 9 read by the reading means 2b; step S403 of creating a number of difference data which is the number of the same images of the aforementioned number; step S404 of creating difference data 10 (referred to as change data 10b hereinafter) which is the number of images displaying the image switching effect of the aforementioned number; and step S405 of creating composite data 11 in which the created 0 data 10a and the change data 10b are added to the extracted still image data 9; and step S406 of creating moving image data 12 by linking together composite data 11.

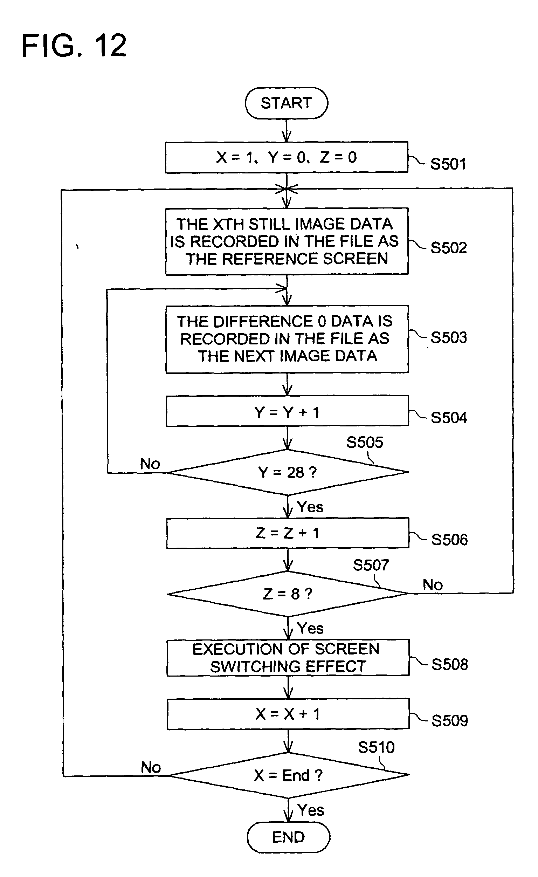

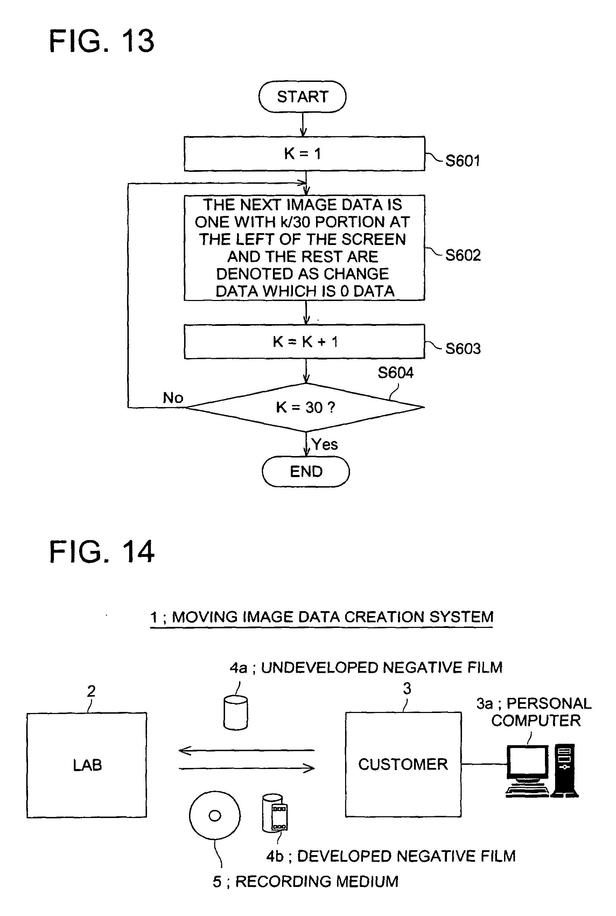

The following is a description of examples of specific steps for creating the moving image data with reference to Figs. 12 and 13. The condition for creating the moving image data are such that the frame rate is 60 frames/second; there are 30 screens for 1 reference screen; the image is switched at 5 second intervals; and the change for switching is created in the last 0.5 seconds of the 5 second interval. It is to be noted that image switching effect is one that can be set in a slide show and can be freely selected from examples such as: one in which the screen switching effect is like that of turning pages; one in which the effect is such that the screen gradually disappears/appears; one in which the page moves vertically and left to right. The example described herein however, is such that the switching effect is from the left and moves gradually to the next image.

Firstly, in step S501, X (the still image data number) is set to 1, Y (the number of image data displayed in 0.5 seconds) is 0, and Z (the repetition frequency of Y) is set to 0. Next in step S502, the Xth still image data is recorded in the file as the reference screen.

In steps S503 to S505, image data in which there is difference 0 between said image and the previous image is added to the file as the image data which is 1/60 second after. This is repeated 29 times and image data groups are created which are displayed for 0.5 seconds.

Next in steps S506 and S507, the operation for creating the image data group is repeated 9 times and composite data that are displayed for 4.5 seconds are created.

The image switching effect is carried out thereafter, but because this example is one in which the switch to the next image is done gradually from the left, the process is as shown in Fig. 13. Specifically, in step S601 K (the number of change data) is set to equal 1, and the next image data is one in which 1/30 is at the left end of the screen and image data other than this one are denoted as having difference 0 (step S602). Thereafter, at steps S603 and S604, this operation is repeated 29 times and composite data which are displayed for 0.5 seconds are thereby created.

In steps S509 and S510, the operation for creating the composite data is repeated the same number of times as the number of still image data, and thus moving data is created in which one still image data is displayed for 4.5 seconds and the switch to the next still image data is made in 0.5 seconds.

In this embodiment, because the moving image data is created in this manner by switching the screens with a prescribed slide effect, the photographic images can be played more effectively using any of devices such as a moving image player for home use like a DVD player and the like, or computer terminals such as a personal computer and the like.

### [Embodiment 3]

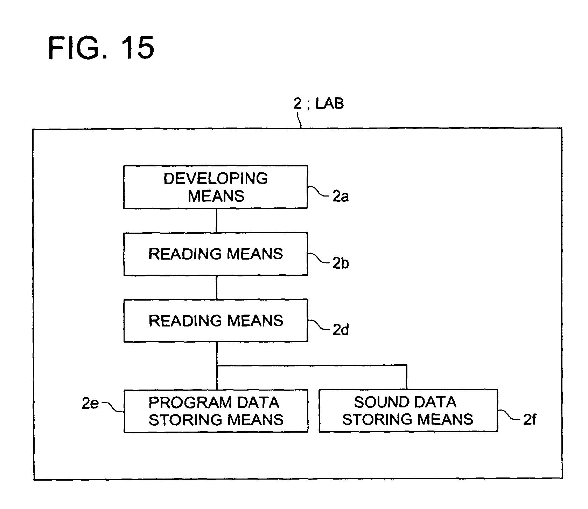

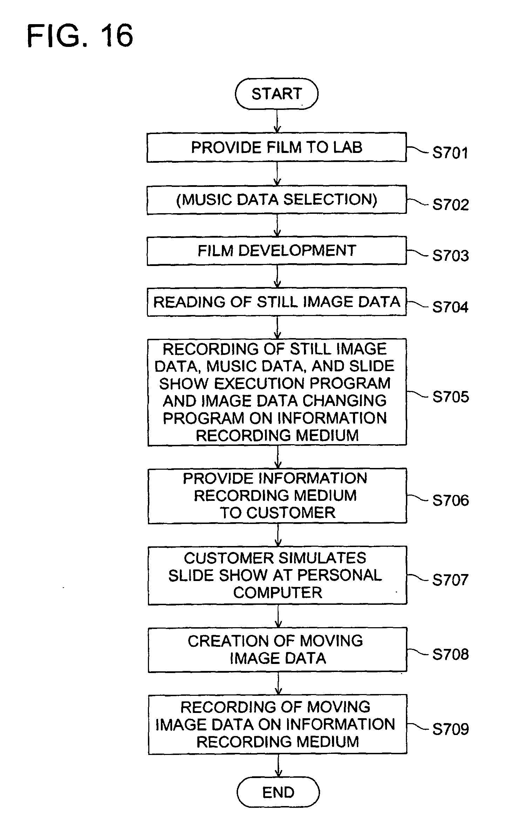

Next the moving image data creation system, the moving image data creation method, the moving image data creation program, and the information recording medium in the third embodiment of this invention is described with reference to Figs. 14 through 16. Fig. 14 shows the configuration of the moving image data creation system of the third embodiment in frame format, while Fig. 15 is a block diagram of the means installed in a photo service shop such a lab and the like. Fig. 16 is a flow chart showing the steps for creating the moving image data of this example.

In the above-described Embodiments 1 and 2, the creation of the moving image data was done in lab 2, but in order to create the moving image data, slide effects such as the display time and screen switching effect for one still image data must be preset, and in some cases the slide effect set by the lab 2 is not consistent with the preferences of customer 3 who has received the information recording medium 5. Thus this example is characterized by the fact that the customer 3 carries out the slide show using the personal computer at home, and thereby creates the moving image data on his or her own after trying the various slide effects.

As shown in Fig. 14, the moving image data creation system 1 of this embodiment comprises a customer 3 who provides the undeveloped negative film 4a as a photograph image; a lab 4 in which the undeveloped negative film 4a is developed and the still image data is read, and the read image data, the slide show execution program, moving image data creation program are written onto an information recording medium 5 such as a CD-R, DVD-R or the like; and a personal computer 3a at which the moving image data is created using the information recording medium 5.

As shown in Fig. 15, the lab 2 comprises: a developing means 2a for developing the undeveloped negative film 4a provided by the customer 3; a reading means 2b for reading the still image data from the developed film; a writing means 2d for writing still image data, music data, a slide show execution program, and a moving image data creation program onto the information recording medium 5; a program data storing means 2e for storing the slide show execution program and a moving image data creation program, and a music data storing means 2f for recording music data.

It is to be noted that as in the first embodiment, each of the above means may be configured separately, or at least the developing means 2a and the reading means 2b may be provided as a single unit. Also, in the case where music data is not recorded on the information recording medium 5, it is not necessary to provide music data storing means 2f. Furthermore, a printer such as an inkjet printer, an electrophotographic printer, a silver salt printer or the like which creates ordinary prints based on image data read by the reading means 2b may be provided. The request may be made via an order shop such as a convenience store and the like, and an information recording medium 6 such as a memory card or CD-R or the like is provided on which is recorded, image data obtained from the developed positive or negative film, photograph print or digital camera.

The steps performed by using the moving image data creation system 1 having the aforementioned configuration are described with reference to the flow chart in Fig. 16, from the point where the customer 3 takes in the undeveloped negative film 4a to the lab 2, to when the customer 3 obtains the information recording medium 5 which has recorded thereon still image data, music data, a slide show execution program and a moving image data creation program.

First, in step S701, the customer 3 takes in the undeveloped negative film 4a with which photographing was done using a film camera to a photo service shop such as a lab 2 or the like and requests development of the undeveloped negative film 4a and creation of the information recording medium 5. At that time, if music data to be played along with the still image data in the slide show is to be recorded on the information recording medium 5, in step S702, lab 2 shows the customer 3 a list of music data recorded on the music data recording means 2f, and the customer 3 selects the desired music data from the list. It is to be noted that if music data is not to be recorded on the information recording medium 5, this step may be omitted.

Furthermore, in step S703, the lab 2 develops the undeveloped negative film 4a using the developing means 2a, and in step S704, the developed negative film is read using a reading means 4b such as a scanner and the like to obtain the still image data. The format of this still image data may be any format that is readable by the computer owned by the customer 3 and the format by which the still image data is read may be selected by the customer 3. It is to be noted that in the case where the customer 3 provides the image data as a developed negative film or as an information recording medium 6, the development processing in step S703 is omitted. Furthermore, when the image data is provided as information recording medium 6, the still image data may be read directly from the information recording medium 6 in step S704.

In step S705, the read still image data, the music data; the slide show execution program, and the moving image data creation program are written onto an information recording medium 5 such as a CD-R, DVD-R or the like in a form that is readable by the computer. It is to be noted that this example presumes that the information recording medium 5 will be read by a personal computer 3a and thus the order in which data is written on the information recording medium 5 at the time of writing can be freely set. In the subsequent step S706, the lab 2 provides the customer 3 with the information recording medium 5 and the developed film 4b.

As is the case for the moving image data creation means in Embodiment 2, the moving image data creation program which is recorded on the information recording medium 5 causes the computer to function as: a means for calculating the number of image data displayed within a certain time from the preset time for displaying one still image data by using the slide effect; a means for sequentially extracting a plurality of still image data 9 read by the reading means 2b; a means for creating a number of difference data 10a, which is equivalent to the number of the same images displayed of the aforementioned calculated number; a means for creating a number of change data 10b which is equivalent to number of screen switching effects displayed of aforementioned calculated number; a means for creating composite data 11 in which the difference 0 data 10a which was created and the change data 10b are added to the extracted still image data 9; and a means for creating moving image data 12 by linking together composite data 11.

Next in step S707, the customer 3 who has obtained the information recording medium 5 uses a personal computer at home to display the still image data as slides using the slide show execution program recorded on the information recording medium 5, and thereby displays the still image data as slides. At the slide effect setting screen, slide effects such as display time for one still image data and display screen switching effect are adjusted, and this simulates the effect moving image data display.

In addition, in step S708, if the customer 3 runs the moving image data creation program on the personal computer 3a, the moving image data creation program refers to the change conditions such as display time and the like at the time of screen switching, which are based on the set slide effect. The computer is thereby caused to function as the aforementioned means, and thus moving image data is created from still image data.

Because still image data created in this manner can be displayed with the desired slide effect, a display effect that is suitable for the photograph image belonging to customer 3 can be achieved. Furthermore, if customer 3 wishes to give the created moving image data to friends and acquaintances as a gift, the moving image data may be written by itself, or along with still image data, music data, or a slide show execution program on an information recording medium 5 such as a CD-R or a DVD-R. Also, the customer 3 who has received the information recording medium 5 may view the moving image data or the still image data on a moving image player for home use such as a DVD player, or on a computer terminal such a personal computer.

In this manner, information recording medium 5 created by the moving image data creation system 1 of this example has recorded thereon a slide show execution program, a moving image data creation program and if necessary, music data, in addition to the still image data. Because the customer 3 can actually simulate a slide show on the personal computer 3a, and then create moving image data, the moving image data can be customized, and this moving image data can be recorded on CD-R, DVD-R or the like and given as gifts to friends and acquaintances. Thus friends and acquaintances can play a slide show which has been arranged with a personal flair on a DVD player and the like without any difficulty.

It is to be noted as was the case in Embodiment 1, the lab 2 may connect to the server 7 which provides music data distribution service via the communication network 8. Also, in each of the above examples, the customer 3 takes in an undeveloped negative film 4a or an information recording medium 6 to the lab 2. However, this invention is not limited to these examples, and still image data from the customer 3 may be received from web sites which do printing services, or the moving image data and the like which was created may be recorded on a information recording medium 5 and provided to a customer, or the moving image data and the like may be sent via a communications network.

As described in the foregoing, the following effects are achieved by the moving image data creation system, moving image data creation method, and moving image data creation program, along with the information recording medium of this invention.

The first effect of this invention is that by simply providing a film from photographing done with a film camera or an information recording medium on which image data taken by digital camera has been recorded, the customer may view photograph images on a moving image player for home use such as a DVD player or the like, or on a computer terminal such as a personal computer.

This is because the photo service shop such as a lab which develops film is equipped with a means for creating moving image data based on still image data read from a film, and the moving image data is provided to the customer on a information recording medium in a state that is playable by a moving image player for home use.

Furthermore, the second effect of the invention is that a moving image data is created which can be displayed with the slide effects that the customer prefers.

This is because by recording the moving image data creation program on the information recording medium, once the customer simulates a slide show and sets the slide effect, he or she may automatically create moving image data which reflect these settings.

## Claims

1. A moving image data creation system comprising:
a reading section to read a plurality of still image data from an information recording medium provided by the customer;
a difference data creating section to create a difference data for each of the plurality of still image data, wherein the difference data which denotes the difference between a number of still image data, and the number being calculated from a preset display time for one image;
a moving image data creating section to create a moving image by adding the difference data to each of the plurality of still image data; and
a recording section to record at least one of the moving image data and the still image data on an information recording medium.

2. The moving image data creation system of claim 1, wherein the reading section to read a still image data from a developed film provided by the customer.

3. The moving data creation system of claim 1, wherein the difference data in which the difference when compared with a corresponding still image is 0.

4. The moving data creation system of claim 1, wherein the data in which the difference when compared with a corresponding still image is 0 as well as change data which is calculated based on a preset screen switching effects.

5. The moving data creation system of claim 1, wherein the recording section to record a slideshow execution program which to control a computer to function as a displaying section to display the still image data for slides, wherein the slideshow execution program is recorded on the information recording medium.

6. The moving data creation system of claim 1, wherein the recording section to record a music data to be played at the time of slide display of the still image data, wherein the music data is recorded on the information recording medium.

7. The moving data creation system of claim 6, further comprising:
a communicating section to communicating with a server which distributes music data via a communication network, and the music data information received from the server is recorded on the information recording medium.

8. The moving data creation system of claim 1, wherein the information recording medium includes at least one of CD-R and DVD-R, and the moving image data is recorded in the information recording region at the inner circumference side of the information recording medium.

9. A moving image data creation method, comprising steps of:
reading a plurality of still image data from an information recording medium provided by the customer using a reading section;
creating a difference data for each of the plurality of still image data, wherein the difference data which denotes the difference between a number of still image data, and the number being calculated from a preset display time for one image;
creating a moving image data by adding the difference data to each still image data by the moving image data creation section; and
recording at least one of the moving image data and the still image data on an information recording medium by the recording section.

10. The moving image data creation method of claim 9, wherein the reading step read a still image data from the developed film.

11. A moving image data creation method, comprising steps of: reading still image data from the developed film by a reading section;
recording the still image data and a moving image data creation program on an information recording medium by recording section, wherein the moving data creation program to control computer to functions as a difference data creating section to create a difference data for each of the plurality of still image data, and the difference data which denotes the difference between a number of still image data, and the number being calculated from a preset display time for one image, and a moving image data creating section to create a moving image by adding the difference data to each of the plurality of still image data.

12. The moving image data creation method of claim 9, wherein the difference data in which the difference when compared with a corresponding still image is 0.

13. The moving image data creation method of claim 9, wherein the difference data in which the difference when compared with a corresponding still image is 0 as well as change data which is calculated based on a preset screen switching effects.

14. The moving image data creation method of claim 11, wherein the display time for one image or the screen switching effect is set based on the slide effects of the slide show performed at the customer's computer terminal, and the moving image data is created by the customer's computer terminal.

15. The moving image data creation method of claim 9, wherein the recording section of this invention records on an information recording medium, a slideshow execution program which allows the computer to function as a section for displaying the still image data as slides.

16. The moving image data creation method of claim 9, wherein the recording step record a music data to be played at the time of slide display of the still image data, wherein the music data is recorded on the information recording medium.

17. The moving image data creation method of claim 16, further comprising step of;
communicating with a server which distributes music data via a communication network, and the music data information received from the server is recorded on the information recording medium.

18. The moving image data creation method of claim 9, wherein the information recording medium includes at least one of a CD-R and DVD-R, and the moving image data is recorded in the information recording region at the inner circumference side of the information recording medium.

19. A moving image data creation program control to the computer to function as a moving data creating apparatus, the moving data creating apparatus comprising:
a extracting section to extract a read still image data from an information recording medium provided by the customer;
a calculating section to calculate the number of data added to each of the still image data based on a preset display time for one image;
a difference data creating section to create a difference data whose difference compared to the still image data is 0;
a moving image data creating section to create a moving image data by sequentially combining data in which the number of difference data is added to each of the still image data which the screens are displayed.

20. A moving image data creation program control to the computer to function as a moving data creating apparatus, the moving data creating apparatus comprising:
a extracting section to extract a read still image data from an information recording medium provided by the customer;
a calculating section to calculate the number of data added to each of the still image data based on a preset display time for one image;
a difference data creating section to create a difference data whose difference compared to the still image data is 0;
a change data creating section to create a change data in which the difference compared to the still image data is calculated based on a preset switching effect;
a moving image data creating section to create a moving image data by sequentially combining data in which the number of difference data and of the change data is added, with each of the still image data in order with which the screens are displayed.

21. An information recording medium comprising a plurality of still image data read from a film or an information recording medium provided by a customer, and a moving image data created by adding to each of the plurality of still image data, a number of difference data indicating the difference between the still image data and a number of still image data, the number being calculated from a preset display time for one image.

22. The information recording medium of claim 21, wherein the difference data in which the difference when compared with a corresponding still image is 0.

23. The information recording medium of claim 21, wherein the data in which the difference when compared with a corresponding still image is 0 as well as change data which is calculated based on a preset screen switching effects.

24. The information recording medium of claim 21, further comprising:
a slideshow execution program control to a computer to function as a section for displaying the still image data as slides.

25. The information recording medium of claim 21, further comprising:
a music data to be played at the time of slide display of the still image data.
